(19) Europäisches Patentamt / European Patent Office / Office européen des brevets

(11) **EP 1 910 226 B1**

(12) **FASCICULE DE BREVET EUROPEEN**

(45) Date de publication et mention de la délivrance du brevet:
**05.08.2009 Bulletin 2009/32**

(21) Numéro de dépôt: **06764639.8**

(22) Date de dépôt: **17.05.2006**

(51) Int Cl.:
***C01B 39/00*** *(2006.01)*

(86) Numéro de dépôt international:
**PCT/FR2006/001112**

(87) Numéro de publication internationale:
**WO 2006/128989 (07.12.2006 Gazette 2006/49)**

(54) **MATERIAU MESOSTRUCTURE A FORTE TENEUR EN ALUMINIUM**

MESOSTRUKTURIERTES MATERIAL MIT HOHEM ALUMINIUMGEHALT

MESOSTRUCTURED MATERIAL WITH HIGH ALUMINUM CONTENT

(84) Etats contractants désignés:
**BE DE FR GB NL**

(30) Priorité: **02.06.2005 FR 0505678**

(43) Date de publication de la demande:
**16.04.2008 Bulletin 2008/16**

(73) Titulaire: **Institut Français du Pétrole**
**92852 Rueil Malmaison Cedex (FR)**

(72) Inventeurs:
- **CHAUMONNOT, Alexandra**
  **F-69008 Lyon (FR)**
- **COUPE, Aurélie**
  **F-77186 Noisiel (FR)**
- **SANCHEZ, Clément**
  **F-91190 Gif-sur-Yvette (FR)**
- **EUZEN, Patrick**
  **F-75001 Paris (FR)**
- **BOISSIERE, Cédric**
  **F-75013 Paris (FR)**
- **GROSSO, David**
  **F-92500 Rueil Malmaison (FR)**

(56) Documents cités:
**EP-B- 0 830 314**      **EP-B- 1 037 940**
**US-B1- 6 387 453**

- **J. S. BECK, J. C. VARTULI, W. J. ROTH, M. E. LEONOWICZ, ET AL: "A new family of mesoporous molecular sieves prepared with liquid crystal templates" J. AM. CHEM. SOC., vol. 114, no. 27, 1992, pages 10834-- 10843;, XP002377423**
- **P. PROKEOVÁA, S. MINTOVA, , B, J. EJKAA AND T. BEIN, B: "Preparation of nanosized micro/mesoporous composites via simultaneous synthesis of Beta/MCM-48 phases" MICROPOROUS AND MESOPOROUS MATERIALS, vol. 64, no. 1-3, 2003, pages 165-174, XP002377424**
- **MICHEL J. VERHOEF, PATRICIA J. KOOYMAN, JAN C. VAN DER WAAL, MARCELLO S. RIGUTTO, JOOP A. PETERS, AND HERMAN VAN BEKKUM: "Partial Transformation of MCM-41 Material into Zeolites: Formation of Nanosized MFI Type Crystallites" CHEM. MATER.;, vol. 13, no. 2, 2001, pages 683-687, XP002377425**
- **JOAQUÍN PÉREZ-PARIENTE, , ISABEL DÍAZ AND JAVIER AG NDEZ: "Organising disordered matter: strategies for ordering the network of mesoporous materials" COMPTES RENDUS CHIMIE, vol. 8, no. 3-4, 2005, pages 569-578, XP002377426**

EP 1 910 226 B1

## Description

Domaine technique

La présente invention se rapporte au domaine des matériaux mésostructurés à base d'oxyde d'aluminium. Elle se rapporte également au domaine des matériaux mésostructurés à forte teneur en aluminium présentant une porosité hiérarchisée ou mixte dans le domaine de la microporosité et de la mésoporosité. Elle concerne également la préparation de ces matériaux qui sont obtenus par l'emploi de la technique de synthèse dite "aérosol".

Etat de la technique antérieure

Les nouvelles stratégies de synthèse permettant d'obtenir des matériaux à porosité bien définie dans une très large gamme, allant des matériaux microporeux aux matériaux macroporeux en passant par des matériaux à porosité hiérarchisée ou mixte, c'est-à-dire ayant des pores de plusieurs tailles, connaissent un très large développement au sein de la communauté scientifique depuis le milieu des années 90 (G. J. de A. A. Soler-Illia, C. Sanchez, B. Lebeau, J. Patarin, Chem. Rev., 2002, 102, 4093). On obtient des matériaux dont la taille des pores est contrôlée. En particulier, le développement de méthodes de synthèse dites de "chimie douce" a conduit à l'élaboration de matériaux mésostructurés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est le plus souvent inférieure à la concentration micellaire critique, ce qui conduit soit à la formation de films mésostructurés dans le cas d'un dépôt sur substrat (technique "dip-coating"), soit à la formation d'une poudre mésostructurée après atomisation de la solution (technique aérosol). A titre d'exemple, le brevet US 6.387.453 divulgue la formation de films hybrides organiques - inorganiques mésostructurés par la technique de "dip-coating", ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm a largement été étudiée. Par la suite, afin d'accroître les propriétés de stabilité hydrothermale tout en développant des propriétés d'acido-basicité relatives à ces matériaux, l'incorporation de l'élément aluminium dans la charpente silicique amorphe par synthèse directe ou par des procédés de post-synthèse a été particulièrement regardée, les matériaux aluminosilicates obtenus possédant un rapport molaire Si/Al compris dans une gamme de 1 à 1000 (S. Kawi, S. C. Shen, Stud. Surf. Sci. Catal., 2000,129, 227 ; S. Kawi, S. C. Shen, Stud. Surf. Sci. Catal., 2000,129, 219 ; R. Mokaya, W. Jones, Chem. Commun., 1997, 2185). Les propriétés de stabilité hydrothermale et les propriétés d'acido-basicité ainsi développées par ces aluminosilicates n'ont cependant pas permis leur utilisation à un stade industriel dans des procédés de raffinage ou de pétrochimie, ce qui a progressivement conduit à l'utilisation de nouveaux agents structurants comme des macromolécules amphiphiles de type copolymères à bloc, ces dernières conduisant à des matériaux mésostructurés possédant une structure généralement hexagonale, cubique ou lamellaire, des pores de taille uniforme comprise dans une gamme de 4 à 50 nm et des parois amorphes d'épaisseur comprise dans une gamme de 3 à 7 nm. En fonction de la structure et du degré d'organisation souhaité pour le matériau mésostructuré final, les méthodes de synthèse employées peuvent avoir lieu en milieu acide (pH ≤ 1) (WO 99/37705) ou en milieu neutre (WO 96/39357), la nature de l'agent structurant utilisé jouant également un rôle prépondérant. Les matériaux aluminosilicates mésostructurés ainsi obtenus présentent des propriétés de stabilité hydrothermale accrues par rapport à leur homologues synthétisés au moyen d'autres agents structurants, leurs propriétés d'acido-basicité demeurant à peu près similaires (1 < Si/Al < 1000). Des valeurs basses du rapport molaire Si/Al telles que Si/Al <20 sont toutefois difficiles à obtenir car il n'est pas aisé d'incorporer des quantités importantes d'aluminium dans le matériau via ces procédés opératoires particuliers (D. Zhao, J. Feng, Q. Huo, N. Melosh, G. H. Fredrickson, B. F. Chmelka, G. D. Stucky, Science, 1998, 279, 548 ; Y. -H. Yue, A. Gédéon, J. -L. Bonardet, J. B. d'Espinose, N. Melosh, J.

Fraissard, Stud. Surf. Sci. Catal., 2000,129, 209).

Beaucoup de travaux ont par ailleurs été entrepris dans le but d'élaborer des matériaux aluminosilicates possédant à la fois les avantages d'une structure mésoporeuse organisée et ceux d'un réseau microcristallin. Plusieurs techniques de synthèse permettant l'élaboration de matériaux mixtes ou composites mésostructurés/zéolithes ont ainsi été répertoriées dans la littérature ouverte. Une première technique de synthèse consiste à synthétiser en première étape un matériau aluminosilicate mésostructuré selon les méthodes classiques explicitées ci-dessus puis, en deuxième étape, à imprégner ce matériau avec un agent structurant habituellement utilisé dans la synthèse de matériaux zéolithiques. Un traitement hydrothermal adapté conduit à une zéolithisation des parois (ou murs) amorphes de l'aluminosilicate mésostructuré de départ (US 6 669 924). Une deuxième technique de synthèse consiste à mettre en présence une solution colloïdale de germes de zéolithes avec un agent structurant habituellement utilisé pour créer une mésostructuration du matériau final. L'élaboration d'une matrice inorganique à mésoporosité organisée et la croissance au sein de cette matrice des germes de zéolithes, de façon à obtenir un matériau aluminosilicate mésostructuré présentant des parois (ou murs) cristallisées, sont simultanées (Z. Zhang, Y. Han, F. Xiao, S. Qiu, L. Zhu, R. Wang, Y. Yu, Z. Zhang, B. Zou, Y. Wang, H. Sun, D. Zhao, Y. Wei, J. Am. Chem. Soc., 2001, 123, 5014 ; Y. Liu, W. Zhang, T. J. Pinnavaia, J. Am. Chem., Soc., 2000, 122, 8791). Une variante à ces deux techniques consiste initialement dans la préparation d'un mélange de précurseurs d'aluminium et de silicium en présence de deux agents structurants, l'un susceptible de générer un système zéolithique, l'autre susceptible de générer une mésostructuration. Cette solution est ensuite soumise à deux étapes de cristallisation à l'aide de conditions de traitement hydrothermale variables, une première étape qui conduit à la formation de la structure mésoporeuse à porosité organisée et une deuxième étape qui conduit à la zéolithisation des parois (ou murs) amorphes (A. Karlsson, M. Stöcker, R. Schmidt, Micropor. Mesopor. Mater., 1999, 27, 181). L'ensemble de ces méthodes de synthèse présente l'inconvénient d'endommager la structure mésoporeuse et donc de perdre les avantages de celle-ci dans le cas où la croissance des germes de zéolithes ou la zéolithisation des parois n'est pas parfaitement maîtrisée, ce qui rend ces techniques délicates à mettre en oeuvre. Il est possible d'éviter ce phénomène en élaborant directement des matériaux composites mésostructurés/zéolithes. Ceci peut se faire par traitement thermique d'un mélange d'une solution de germes de zéolithes et d'une solution de germes d'aluminosilicates mésostructurés (P. Prokesova, S. Mintova, J. Cejka, T. Bein, Micropor. Mesopor. Mater., 2003, 64, 165) ou bien par croissance d'une couche de zéolithe à la surface d'un aluminosilicate mésostructuré pré-synthétisé (D. T. On, S. Kaliaguine, Angew. Chem. Int. Ed., 2002, 41, 1036). D'un point de vue expérimental, à l'inverse des techniques "dip-coating" ou "aérosol" décrites préalablement, les matériaux aluminosilicates à porosité hiérarchisée ainsi définis ne sont pas obtenus par une concentration progressive des précurseurs inorganiques et de(s) l'agent(s) structurant(s) au sein de la solution où ils sont présents mais sont classiquement obtenus par précipitation directe au sein d'une solution aqueuse ou dans des solvants polaires en jouant sur la valeur de la concentration micellaire critique de l'agent structurant. De plus, la synthèse de ces matériaux obtenue par précipitation nécessite une étape de mûrissement en autoclave et tous les réactifs ne sont pas intégrés aux produits en quantité stoechiométrique puisqu'ils peuvent se retrouver dans le surnageant. Les particules élémentaires habituellement obtenues ne présentent pas de forme régulière et sont caractérisées généralement par une taille variant généralement entre 200 et 500 nm et parfois plus.

## Résumé

L'invention porte sur un matériau mésostructuré constitué d'au moins deux particules sphériques élémentaires, chacune desdites particules comprenant une matrice mésostructurée à base d'oxyde d'aluminium, ayant une taille de pores comprise entre 1,5 et 30 nm et une teneur en oxyde d'aluminium représentant plus de 46% poids par rapport à la masse de ladite matrice, laquelle présente des parois amorphes d'épaisseur comprise entre 1 et 30 nm, lesdites particules sphériques élémentaire ayant un diamètre maximal de 10 $\mu$m. Ladite matrice mésostructurée à base d'oxyde d'aluminium comprend préférentiellement de l'oxyde de silicium dans une proportion telle que le rapport molaire Si/Al de ladite matrice soit strictement inférieur à 1.

Chacune desdites particules sphériques élémentaires peut également comprendre des nanocristaux zéolithiques ayant une taille de pores comprise entre 0,2 et 2 nm de sorte que ledit matériau selon l'invention présente une porosité mixte de nature à la fois mésostructurée et zéolithique.

La présente invention concerne également la préparation du matériau selon l'invention. Un procédé de préparation du matériau mésostructuré selon l'invention comprend a) le mélange en solution d'au moins un tensioactif, d'au moins un précurseur aluminique et éventuellement d'au moins un précurseur silicique ; b) l'atomisation par aérosol de la solution obtenue à l'étape a) pour conduire à la formation de gouttelettes sphériques de diamètre inférieur ou égal à 200 $\mu$m ; c) le séchage desdites gouttelettes et d) l'élimination dudit tensioactif pour l'obtention d'un matériau mésostructuré. Pour la préparation d'un matériau mixte mésostructuré/zéolithique, on procède par exemple à une étape préalable $a_0$) consistant en la synthèse, en présence d'au moins un agent structurant, de nanocristaux zéolithiques de taille nanométrique maximale égale à 300 nm afin d'obtenir une solution colloïdale dans laquelle sont dispersés lesdits nanocristaux ou on peut introduire dans le mélange selon l'étape a) des cristaux zéolithiques, qui présentent la caractéristique de se disperser sous la forme de nanocristaux de taille nanométrique maximale égale à 300 nm en solution. La structure ordonnée de la matrice de chacune des particules sphériques constituant le matériau selon l'invention est consécutive au phénomène de micellisation ou d'auto-assemblage par évaporation induit par la technique dite aérosol.

Intérêt

Le matériau mésostructuré selon l'invention est un matériau constitué de particules sphériques élémentaires, chacune desdites particules comprenant une matrice mésostructurée présentant une teneur élevée en aluminium. Ladite matrice mésostructurée peut également contenir de l'oxyde de silicium, ce qui, dans ce cas, confère au matériau selon l'invention des propriétés d'acido-basicité intéressantes. La présente invention offre également un matériau à porosité mixte dans lequel des nanocristaux zéolithiques sont piégés dans la matrice mésostructurée, un tel matériau étant avantageux car il présente simultanément les propriétés structurales, texturales et d'acido-basicité propres aux matériaux de la famille des zéolithes et aux matériaux à base d'oxyde d'aluminium, plus particulièrement aux matériaux aluminosilicates mésostructurés. La structure ordonnée du matériau selon l'invention étant consécutive au phénomène de micellisation ou d'auto-assemblage par évaporation induit par la technique dite aérosol, permet d'élaborer de façon aisée des matériaux mésostructurés, en présence ou non de nanocristaux zéolithiques, sans endommager la nature de la phase mésostructurée ni celle de la phase zéolithique éventuellement présente et de travailler avec une large gamme de nanocristaux de zéolithes quels que soient leurs procédés de synthèse initiaux. En effet, pour la préparation d'un matériau à porosité mixte mésostructurée/zéolithique, on peut utiliser des cristaux zéolithiques de taille bien supérieure à 300 nm dès lors qu'ils ont la propriété de se disperser en solution, notamment en solution acide et très préférentiellement en solution aquo-organique acide, sous la forme de nanocristaux de taille nanométrique maximale égale à 300 nm. Par ailleurs, l'élaboration à l'échelle du nanomètre d'un matériau mésostructuré/zéolithique conduit à une connexion privilégiée des zones microporeuses et mésoporeuses au sein d'une même particule sphérique.

De plus, le matériau mésostructuré selon l'invention, en présence ou non de nanocristaux zéolithiques, étant constitué de particules élémentaires sphériques, le diamètre de ces particules variant avantageusement de 50 nm à 10 μm et de préférence de 50 à 300 nm, la taille limitée de ces particules ainsi que leur forme homogène permettent d'avoir une meilleure diffusion des réactifs et des produits de la réaction lors de l'emploi du matériau selon l'invention dans des applications industrielles potentielles comparativement à des matériaux connus de l'état de la technique se présentant sous la forme de particules élémentaires de forme non homogène, c'est-à-dire irrégulière, et de taille très supérieure à 500 nm. De plus, par rapport aux synthèses connues des matériaux mésostructurés, la préparation du matériau selon l'invention est réalisée en continu, la durée de préparation est réduite (quelques heures contre de 12 à 24 heures en utilisant l'autoclavage) et la stoechiométrie des espèces non volatiles présentes dans la solution initiale des réactifs est maintenue dans le matériau de l'invention.

Exposé de l'invention

La présente invention a pour objet un matériau mésostructuré constitué d'au moins deux particules sphériques élémentaires, chacune desdites particules comprenant une matrice mésostructurée à base d'oxyde d'aluminium, ayant une taille de pores comprise entre 1,5 et 30 nm et une teneur en oxyde d'aluminium représentant plus de 46% poids par rapport à la masse de ladite matrice, laquelle présente des parois amorphes d'épaisseur comprise entre 1 et 30 nm, lesdites particules sphériques élémentaires ayant un diamètre maximal de 10 μm.

Par matériau mésostructuré, on entend au sens de la présente invention un matériau présentant au moins une porosité organisée à l'échelle des mésopores de chacune desdites particules sphériques, c'est-à-dire une porosité organisée à l'échelle des pores ayant une taille uniforme comprise entre 1,5 et 30 nm et de préférence entre 1,5 et 10 nm et répartis de façon homogène et régulière dans chacune desdites particules (mésostructuration du matériau). Plus précisément, dans le cadre de la présente invention, la mésostructuration du matériau est inhérente à la matrice, incluse dans ledit matériau : la matrice à base d'oxyde d'aluminium, comprise dans chacune desdites particules sphériques constituant le matériau selon l'invention, est mésostructurée. Elle présente des mésopores ayant une taille uniforme comprise entre 1,5 et 30 nm et de préférence entre 1,5 et 10 nm, répartis de façon homogène et régulière dans chacune desdites particules. Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention. La matière située entre les mésopores de la matrice mésostructurée est amorphe et forme des parois, ou murs, dont l'épaisseur est comprise entre 1 et 30 nm. L'épaisseur des parois correspond à la distance séparant un pore d'un autre pore. L'organisation de la mésoporosité décrite ci-dessus conduit à une structuration de la matrice à base d'oxyde d'aluminium, laquelle peut être hexagonale, vermiculaire, cholestérique, lamellaire, bicontinue ou cubique et de façon préférée vermiculaire. Le matériau selon l'invention présente également une macroporosité texturale interparticulaire.

Conformément à l'invention, lesdites particules sphériques élémentaires constituant le matériau selon l'invention ont un diamètre maximal de 10 $\mu$m, lequel est avantageusement compris entre 50 nm et 10 $\mu$m, et très avantageusement compris entre 50 et 300 nm. Plus précisément, lesdites particules sont présentes dans le matériau selon l'invention sous la forme d'agrégats.

Le matériau selon l'invention présente avantageusement une surface spécifique comprise entre 100 et 1200 m²/g, de manière avantageuse comprise entre 200 et 800 m²/g et de manière très avantageuse comprise entre 300 et 600 m²/g.

Selon un premier mode de réalisation du matériau selon l'invention, la matrice à base d'oxyde d'aluminium, mésostructurée, est entièrement aluminique.

Selon un deuxième mode de réalisation du matériau selon l'invention, la matrice à base d'oxyde d'aluminium, mésostructurée, comprend en outre de l'oxyde de silicium. La matrice, incluse dans chacune des particules sphériques du matériau selon l'invention, est dans ce cas un aluminosilicate. La teneur en oxyde de silicium dans la matrice aluminosilicate est telle que le rapport molaire Si/Al est strictement inférieur à 1.

Selon un troisième mode de réalisation du matériau selon l'invention, chacune desdites particules sphériques comprend en outre des nanocristaux zéolithiques ayant une taille de pores comprise entre 0,2 et 2 nm. Le matériau selon l'invention présente alors à l'échelle desdites particules sphériques non seulement une porosité organisée à l'échelle des mésopores ayant une taille uniforme comprise entre 1,5 et 30 nm et de préférence entre 1,5 et 10 nm, répartis de façon homogène et régulière dans chacune desdites particules (mésostructuration telle que décrite plus haut) mais également une microporosité de type zéolithique dont les caractéristiques (type structural de la zéolithe, composition chimique de la charpente zéolithique) sont fonction du choix des nanocristaux zéolithiques. Conformément au troisième mode de réalisation du matériau selon l'invention, les nanocristaux zéolithiques présentent une taille de pores comprise entre 0,2 et 2 nm, de préférence entre 0,2 et 1 nm et de manière très préférée entre 0,2 et 0,6 nm. Lesdits nanocristaux génèrent la microporosité dans chacune des particules sphériques élémentaires constituant le matériau selon l'invention. Conformément à ce troisième mode de réalisation du matériau selon l'invention, ladite matrice peut être soit entièrement silicique soit comprendre en outre de l'oxyde de silicium. On appellera dans la suite de l'exposé le matériau selon le troisième mode de réalisation un matériau mixte mésostructuré / zéolithiquee.

Conformément au troisième mode de réalisation du matériau mésostructuré selon l'invention, les nanocristaux zéolithiques représentent avantageusement de 0,1 à 30% poids, de préférence de 0,1 à 20% poids et de manière très préférée de 0,1 à 10% poids du matériau de l'invention. Toute zéolithe et en particulier, mais de façon non restrictive, celles répertoriées dans "Atlas of zeolite framework types", 5th revised Edition, 2001, Ch.Baerlocher, W.M.Meier, D.H.Olson peut être employée dans les nanocristaux zéolithiques présents dans chacune des particules sphériques élémentaires constituant le matériau selon l'invention. Les nanocristaux zéolithiques comprennent de préférence au moins une zéolithe choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1. De manière très préférée, les nanocristaux zéolithiques comprennent au moins une zéolithe choisie parmi les zéolithes de type structural MFI, BEA, FAU, et LTA. Des nanocristaux de différentes zéolithes et notamment de zéolithes de type structuraux différents peuvent être présents dans chacune des particules sphériques constituant le matériau selon l'invention. En particulier, chacune des particules sphériques constituant le matériau selon l'invention peut comprendre de manière avantageuse au moins des premiers nanocristaux zéolithiques dont la zéolithe est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1, de préférence parmi les zéolithes de type structural MFI, BEA, FAU, et LTA et au moins des seconds nanocristaux zéolithiques dont la zéolithe est différente de celle des premiers nanocristaux zéolithiques et est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1, de préférence parmi les zéolithes de type structural MFI, BEA, FAU, et LTA. Les nanocristaux zéolithiques comprennent avantageusement au moins une zéolithe soit entièrement silicique soit contenant, outre du silicium, au moins un élément T choisi parmi l'aluminium, le fer, le bore, l'indium et le gallium, de préférence l'aluminium. Les nanocristaux zéolithiques ont une taille maximale de 300 nm et de façon préférée ont une taille comprise entre 30 et 200 nm.

Le matériau mésostructuré de la présente invention, ayant une matrice mésostructurée entièrement aluminique ou de nature aluminosilicate et présentant éventuellement des nanocristaux de zéolithes piégés au sein de cette matrice, peut être obtenu sous forme de poudre, de billes, de pastilles, de granulés, ou d'extrudés, les opérations de mises en forme étant réalisées par les techniques classiques connues de l'homme du métier. De préférence, le matériau selon l'invention est obtenu sous forme de poudre, laquelle est constituée de particules sphériques élémentaires ayant un diamètre maximal de 10 $\mu$m, ce qui facilite la diffusion éventuelle des composés dans le cas de l'emploi du matériau selon l'invention dans une application industrielle potentielle.

La présente invention a également pour objet la préparation du matériau selon l'invention. Elle se propose d'abord de fournir un procédé de préparation du matériau mésostructuré selon l'invention comprenant une matrice mésostructurée entièrement aluminique ou de nature aluminosilicate. Ledit procédé comprend : a) le mélange en solution d'au moins un tensioactif, d'au moins un précurseur aluminique et éventuellement d'au moins un précurseur silicique ; b) l'atomisation par aérosol de la solution obtenue à l'étape a) pour conduire à la formation de gouttelettes sphériques de diamètre inférieur ou égal à 200 μm ; c) le séchage desdites gouttelettes et d) l'élimination dudit tensioactif pour l'obtention d'un matériau mésostructuré. Ledit procédé est appelé dans la suite de l'exposé "procédé principal de préparation selon l'invention".

Le précurseur aluminique et éventuellement le précurseur silicique utilisé(s) dans l'étape a) du procédé principal de préparation selon l'invention sont des précurseurs d'oxydes inorganiques bien connus de l'Homme du métier. Le précurseur aluminique est avantageusement un sel inorganique d'aluminium de formule AlX$_3$, X étant un halogène ou le groupement NO$_3$. De préférence, X est le chlore. Il est également possible d'employer comme sel inorganique du sulfate d'aluminium Al$_2$(SO$_4$)$_3$. Le précurseur aluminique peut être aussi un précurseur organométallique de formule Al(OR")$_3$ ou R" = éthyle, isopropyle, n-butyle, s-butyle ou t-butyle ou un précurseur chélaté tel que l'aluminium acétylacétonate (Al(C$_5$H$_8$O$_2$)$_3$). Le précurseur aluminique peut aussi être un oxyde ou un hydroxyde d'aluminium. Le précurseur silicique, s'il est présent dans l'étape a), est obtenu à partir de toute source de silice et avantageusement d'un précurseur silicate de sodium de formule SiO$_2$, NaOH, d'un précurseur chloré de formule SiCl$_4$, d'un précurseur organométallique de formule Si(OR)$_4$ où R = H, méthyle, éthyle ou d'un précurseur chloroalkoxyde de formule Si(OR)$_{4-x}$Cl$_x$ où R = H, méthyle, éthyle, x étant compris entre 0 et 4. Le précurseur silicique peut également avantageusement être un précurseur organométallique de formule Si(OR)$_{4-x}$R'$_x$ où R = H, méthyle, éthyle et R' est une chaîne alkyle ou une chaîne alkyle fonctionnalisée, par exemple par un groupement thiol, amino, β dicétone, acide sulfonique, x étant compris entre 0 et 4. Le tensioactif utilisé pour la préparation du mélange selon l'étape a) du procédé principal de préparation selon l'invention est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique se présente sous la forme d'un copolymère possédant au moins deux parties de polarité différente ce qui lui confère des propriétés de macromolécule amphiphile. Il peut s'agir notamment d'un copolymère choisi dans la liste non exhaustive des familles de copolymères suivantes : les copolymères fluorés (-[CH$_2$-CH$_2$-CH$_2$-CH$_2$-O-CO-R1]- avec R1 = C$_4$F$_9$, C$_8$F$_{17}$, etc.), les copolymères biologiques comme les polyacides aminés (polylysine, alginates, etc.), les dendrimères, les copolymères bloc constitués de chaînes de poly(oxydes d'alkylène) et tout autre copolymère à caractère amphiphile connu de l'Homme du métier (S. Förster, M. Antionnetti, Adv.Mater, 1998, 10, 195-217, S. Förster, T.Plantenberg, Angew. Chem. Int. Ed, 2002, 41, 688-714, H. Côlfen, Macromol. Rapid Commun, 2001, 22, 219-252). Dé manière préférée, on utilise dans le cadre de la présente invention un copolymère choisi parmi la famille des copolymères blocs constitués de chaînes de poly (oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly (oxyde d'alkylène) de nature hydrophile et l'autre bloc est constitué d'une chaîne de poly(oxyde d'alkylène) de nature hydrophobe. Pour un copolymère à trois blocs, deux des blocs sont constitués d'une chaîne de poly(oxyde d'alkylène) de nature hydrophile tandis que l'autre bloc, situé entre les deux blocs aux parties hydrophiles, est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly (oxyde d'éthylène) notées (PEO)$_x$ et (PEO)$_z$ et les chaînes de poly(oxyde d'alkylène) de nature hydrophobe sont des chaînes de poly(oxyde de propylène) notées (PPO)$_y$, des chaînes de poly(oxyde de butylène) ou des chaînes mixtes dont chaque chaîne est un mélange de plusieurs monomères d'oxyde d'alkylène. De manière très préférée, dans le cas d'un copolymère à trois blocs, on utilise un composé de formule (PEO)$_x$-(PPO)$_y$-(PEO)$_z$ où x est compris entre 5 et 300, y est compris entre 33 et 300 et z est compris entre 5 et 300. De préférence, les valeurs de x et z sont identiques. On utilise très avantageusement un composé dans lequel x = 20, y = 70 et z = 20 (poly(oxyde d'éthyléne)$_{20}$-poly(oxyde de propyléne)$_{70}$-poly(oxyde d'éthylène)$_{20}$ ou encore appelé P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape a) du procédé principal de préparation selon l'invention. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe.

L'étape d'atomisation du mélange selon l'étape b) du procédé principal de préparation selon l'invention produit des gouttelettes sphériques de diamètre inférieur ou égal à 200 μm et de préférence dans une gamme comprise entre 50 nm et 20 μm. La distribution en taille de ces gouttelettes est de type lognormale. Le générateur d'aérosol utilisé ici est un appareil commercial de modèle 3078 fourni par TSI. L'atomisation de la solution se fait dans une chambre dans laquelle est envoyé un gaz vecteur, un mélange $O_2/N_2$ (air sec), sous une pression P égale à 1,5 bars. Conformément à l'étape c) du procédé principal de préparation selon l'invention, on procède au séchage desdites gouttelettes. Ce séchage est réalisé par le transport desdites gouttelettes via le gaz vecteur, le mélange $O_2/N_2$, dans des tubes en verre, ce qui conduit à l'évaporation progressive de la solution, par exemple de la solution aquo-organique acide tel que précisé dans la suite de cet exposé, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre d'une seconde. Les particules sont alors récoltées dans un filtre et constituent le matériau mésostructuré selon l'invention. Une pompe placée en fin de circuit favorise l'acheminement des espèces dans le dispositif expérimental aérosol. Le séchage des gouttelettes selon l'étape c) du procédé principal de préparation selon l'invention est avantageusement suivi d'un passage à l'étuve à une température comprise entre 50 et 150°C. L'élimination du tensioactif au cours de l'étape d) du procédé principal de préparation selon l'invention afin d'obtenir le matériau selon l'invention est avantageusement réalisée par des procédés d'extraction chimique ou par traitement thermique et de préférence par calcination sous air dans une gamme de température de 300 à 1000°C et plus précisément dans une gamme de 500 à 600°C pendant une durée de 1 à 24 heures et de façon préférée pendant une durée de 2 à 6 heures.

La présente invention se propose également de fournir deux procédés de préparation alternatifs d'un matériau mixte mésostructuré / zéolithique selon l'invention, c'est-à-dire un matériau dans lequel chacune des particules sphériques qui le constitue comprend une matrice mésostructurée, entièrement aluminique ou de nature aluminosilicate, et des nanocristaux zéolithiques ayant une taille de pores comprise entre 0,2 et 2 nm.

Un premier mode de réalisation du procédé de préparation du matériau présentant des nanocristaux zéolithiques piégés dans la matrice oxyde mésostructurée selon l'invention appelé par la suite "premier procédé de préparation du matériau mixte mésostructuré/zéolithique selon l'invention" comprend les mêmes étapes a), b), c) et d) du procédé principal de préparation selon l'invention décrit plus haut pour la préparation d'un matériau mésostructuré ayant une matrice mésostructurée entièrement aluminique ou de nature aluminosilicate. Ledit premier procédé de préparation du matériau mixte mésostructuré/zéolithique selon l'invention comporte également une étape préalable $a_0$) consistant en la synthèse, en présence d'un agent structurant, de nanocristaux zéolithiques de taille nanométrique maximale égale à 300 nm afin d'obtenir une solution colloïdale dans laquelle sont dispersés lesdits nanocristaux. Ladite solution colloïdale obtenue selon $a_0$) est introduite dans le mélange selon l'étape a) du procédé principal de préparation selon l'invention. Ledit premier procédé de préparation du matériau mixte mésostructuré/zéolithique selon l'invention comprend donc : $a_0$) la synthèse, en présence d'au moins un agent structurant, de nanocristaux zéolithiques de taille nanométrique maximale égale à 300 nm afin d'obtenir une solution colloïdale dans laquelle sont dispersés lesdits nanocristaux ; a') le mélange en solution d'au moins un tensioactif, d'au moins un précurseur aluminique et éventuellement d'au moins un précurseur silicique, et d'au moins une solution colloïdale obtenue selon $a_0$) ; b') l'atomisation par aérosol de la solution obtenue à l'étape a') pour conduire à la formation de gouttelettes sphériques de diamètre inférieur ou égal à 200 $\mu$m ; c') le séchage desdites gouttelettes et d') l'élimination dudit tensioactif et dudit agent structurant pour l'obtention d'un matériau mixte mésostructuré/zéolithique.

Conformément à l'étape $a_0$) du premier procédé de préparation du matériau mixte mésostructuré/zéolithique selon l'invention, les nanocristaux zéolithiques sont synthétisés selon des protocoles opératoires connus de l'Homme du métier. En particulier, la synthèse de nanocristaux de zéolithe Bêta a été décrite par T. Bein et coll., Micropor. Mesopor. Mater., 2003, 64, 165. La synthèse de nanocristaux de zéolithe Y a été décrite par T. J. Pinnavaia et coll., J. Am. Chem. Soc., 2000, 122, 8791. La synthèse de nanocristaux de zéolithe faujasite a été décrite dans Kloetstra et coll., Microporous Mater., 1996, 6, 287 ; La synthèse de nanocristaux de zéolithe ZSM-5 a été décrite dans plusieurs publications : R. de Ruiter et coll., Synthesis of Microporous Materials, Vol. I ; M. L. Occelli, H. E. Robson (eds.), Van Nostrand Reinhold, New York, 1992, 167 ; A.E. Persson, B.J. Schoeman, J. Sterte, J.-E. Otterstedt, Zeolites, 1995, 15, 611-619. On synthétise généralement des nanocristaux zéolithiques en préparant un mélange réactionnel renfermant au moins une source silicique, éventuellement au moins une source d'au moins un élément T choisi parmi l'aluminium, le fer, le bore, l'indium et le gallium, de préférence au moins une source aluminique, et au moins un agent structurant. Le mélange réactionnel est soit aqueux soit aquo-organique, par exemple un mélange eau-alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température qui ne dépasse pas 120°C jusqu'à la formation de nanocristaux zéolithiques. A l'issue dudit traitement hydrothermal, on obtient une solution colloïdale dans laquelle les nanocristaux se trouvent à l'état dispersé. L'agent structurant peut être ionique ou neutre selon la zéolithe à synthétiser. Il est fréquent d'utiliser les agents structurants de la liste non exhaustive suivante : des cations organiques azotés, des éléments de la famille, des alcalins (Cs, K, Na, etc.),

des éthercouronnes, des diamines ainsi que tout autre agent structurant bien connu de l'Homme de l'Art.

Dans un deuxième mode de réalisation du procédé de préparation du matériau mixte mésostructuré/zéolithique selon l'invention appelé par la suite "deuxième procédé de préparation du matériau mixte mésostructuré/zéolithique selon l'invention", on utilise initialement des cristaux zéolithiques, qui présentent la caractéristique de se disperser sous la forme de nanocristaux de taille nanométrique maximale égale à 300 nm en solution, par exemple en solution aquo-organique acide. Lesdits cristaux zéolithiques sont introduits dans le mélange selon l'étape a) du procédé principal de préparation selon l'invention décrit plus haut pour la préparation d'un matériau mésostructuré ayant une matrice mésostructurée entièrement aluminique ou de nature aluminosilicate. Ledit deuxième procédé de préparation du matériau mixte mésostructuré/zéolithique selon l'invention comprend a") le mélange en solution d'au moins un tensioactif, d'au moins un précurseur aluminique, éventuellement d'au moins un précurseur silicique, et de cristaux zéolithiques se dispersant sous la forme de nanocristaux de taille nanométrique maximale égale à 300 nm dans ladite solution ; b") l'atomisation par aérosol de ladite solution obtenue à l'étape a") pour conduire à la formation de gouttelettes sphériques de diamètre inférieur ou égal à 200 μm ; c") le séchage desdites gouttelettes et d") l'élimination d'au moins dudit tensioactif pour l'obtention d'un matériau mixte mésostructuré/zéolithique.

Dans l'étape a") du deuxième procédé de préparation du matériau mixte mésostructuré/zéolithique selon l'invention, on utilise des cristaux zéolithiques. Toute zéolithe cristallisée connue dans l'état de la technique qui a la propriété de se disperser en solution, par exemple en solution aquo-organique acide, sous la forme de nanocristaux de taille nanométrique maximale égale à 300 nm convient pour la mise en oeuvre de l'étape a"). Lesdits cristaux zéolithiques sont synthétisés par des méthodes connues de l'homme du métier. Les cristaux zéolithiques utilisés dans l'étape a") peuvent être déjà sous la forme de nanocristaux. On utilise aussi avantageusement des cristaux zéolithiques de taille supérieure à 300 nm, par exemple comprise entre 300 nm et 200 μm qui se dispersent en solution, par exemple en solution aquo-organique, préférentiellement en solution aquo-organique acide, sous la forme de nanocristaux de taille nanométrique maximale égale à 300 nm. L'obtention de cristaux zéolithiques se dispersant sous la forme de nanocristaux de taille nanométrique maximale égale à 300 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape d") du deuxième procédé de préparation du matériau mixte mésostructuré/zéolithique selon l'invention.

Conformément aux deux procédés de préparation du matériau mixte mésostructuré/zéolithique selon l'invention, le précurseur aluminique et éventuellement le précurseur silicique, utilisés dans l'étape a') du premier procédé de préparation du matériau mixte mésostructuré/zéolithique selon l'invention, respectivement dans l'étape a") du deuxième procédé de préparation du matériau mixte mésostructuré/zéolithique selon l'invention, sont ceux déjà donnés plus haut dans la description du procédé principal de préparation selon l'invention pour la préparation d'un matériau mésostructuré ayant une matrice mésostructurée entièrement aluminique ou de nature aluminosilcate. Il en va de même pour le tensioactif utilisé dans l'étape a') du premier procédé de préparation du matériau mixte mésostructuré/zéolithique selon l'invention, respectivement dans l'étape a") du deuxième procédé de préparation du matériau mixte mésostructuré/zéolithique selon l'invention. Il peut s'agir d'un tensioactif ionique ou non ionique. Un tensioactif se présentant sous la forme d'un copolymère bloc constitué de chaînes de poly(oxyde d'alkylène) est particulièrement préféré. Une description précise de cette forme de tensioactif est donnée plus haut pour la préparation d'un matériau mésostructuré ayant une matrice mésostructurée entièrement aluminique ou de nature aluminosilicate (étape a) du procédé principal de préparation selon l'invention).

La solution dans laquelle sont mélangés l'ensemble des réactifs selon l'étape a) du procédé principal de préparation selon l'invention ou selon l'étape a') du premier procédé de préparation du matériau mixte mésostructuré/zéolithique selon l'invention ou encore selon l'étape a") du deuxième procédé de préparation du matériau mixte mésostructuré/zéolithique selon l'invention peut être acide, neutre ou basique. De préférence, ladite solution est acide et présente un pH maximal égal à 3, de préférence compris entre 0 et 2. Les acides utilisés pour obtenir une solution acide de pH maximal égal à 3 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire miscible à l'eau, notamment du THF ou un alcool, dans ce dernier cas préférentiellement de l'éthanol. Ladite solution peut aussi être pratiquement organique, de préférence pratiquement alcoolique, la quantité d'eau étant telle que l'hydrolyse des précurseurs inorganiques soit assurée (quantité stoechiométrique). De manière très préférée, ladite solution dans laquelle sont mélangés au moins un précurseur aluminique, au moins un tensioactif et éventuellement au moins un précurseur silicique, est un mélange aquo-organique acide, de manière très préférée un mélange eau acide - alcool. Dans le cas préféré où la matrice du matériau selon l'invention contient de l'oxyde de silicium en plus de l'oxyde d'aluminium, les concentrations en précurseurs silicique et aluminique dans l'étape a) du procédé principal de préparation selon l'invention ou dans les étapes a') et. a") des premier et deuxième procédés de préparation du matériau mixte mésostructuré/zéolithique selon l'invention sont définies par le rapport molaire Si/Al, celui-ci étant strictement inférieur à 1. Pour la préparation d'un matériau mixte mésostructuré/zéolithique selon l'invention, la quantité de nanocristaux zéolithiques dispersés dans la solution colloïdale introduite au cours de l'étape a') du premier procédé de préparation du matériau mixte mésostructuré/zéolithique selon l'invention, respectivement celle des cristaux zéolithiques introduits au cours de l'étape a") du deuxième procédé de préparation du matériau mixte mésostructuré/zéolithique selon l'invention est telle que les nanocristaux zéolithiques représentent avantageusement de 0,1 à 30% poids, de préférence de 0,1 à 20% poids et de manière très préférée de 0,1 à 10% poids du matériau mixte mésostructuré/zéolithique de l'invention. La concentration initiale en tensioactif introduit dans le mélange selon l'étape a) du procédé principal de préparation selon l'invention ou selon l'étape a') du premier procédé de préparation du matériau mixte mésostructuré/zéolithique selon l'invention ou encore selon l'étape a") du deuxième procédé de préparation du matériau mixte mésostructuré/zéolithique selon l'invention est définie par $c_0$ et $c_0$ est définie par rapport à la concentration micellaire critique ($c_{mc}$) bien connue de l'Homme du métier. La $c_{mc}$ est la concentration limite au delà de laquelle se produit le phénomène d'auto-arrangemant des molécules du tensioactif dans la solution. La concentration $c_0$ peut être inférieure, égale ou supérieure à la $c_{mc}$, de préférence elle est inférieure à la $c_{mc}$. Dans une mise en oeuvre préférée de chacun des trois procédés selon l'invention (procédé principal de préparation selon l'invention, premier procédé de préparation du matériau mixte mésostructuré/zéolithique selon l'invention et deuxième procédé de préparation du matériau mixte mésostructuré/zéolithique selon l'invention), la concentration $c_0$ est inférieure à la $c_{mc}$ et ladite solution visée à chacune des étapes a), a') et a") de chacun des trois procédés de préparation selon l'invention est un mélange eau acide - alcool.

Dans le cas où la solution visée à chacune des étapes a), a') et a") de chacun des trois procédés de préparation selon l'invention est un mélange eau-solvant organique, de préférence acide, il est préféré au cours de chacune desdites étapes a), a') et a") de chacun des trois procédés de préparation selon l'invention que la concentration en tensioactif à l'origine de la mésostructuration de la matrice soit inférieure à la concentration micellaire critique de sorte que l'évaporation de ladite solution aquo-organique, préférentiellement acide, au cours de chacune des étapes b), b') et b") de chacun des trois procédés de préparation selon l'invention par la technique d'aérosol induise un phénomène de micellisation ou d'auto-assemblage conduisant à la mésostructuration de la matrice du matériau selon l'invention. Dans le cas de la préparation d'un matériau mixte mésostructuré/zéolithique, la mésostructuration de la matrice du matériau se produit autour des nanocristaux zéolithiques lesquels demeurent inchangés dans leur forme et leur taille au cours des étapes b') et c') du premier procédé de préparation du matériau mixte mésostructuré/zéolithique selon l'invention respectivement des étapes b") et c") du deuxième procédé de préparation du matériau mixte mésostructuré/zéolithique selon l'invention. Lorsque $c_0 < c_{mc}$, la mésostructuration de la matrice du matériau selon l'invention, préparé selon l'un des trois procédés de l'invention, est consécutive à une concentration progressive, au sein de chaque gouttelette, du précurseur aluminique, du tensioactif, et éventuellement du précurseur silicique jusqu'à une concentration en tensioactif $c > c_{mc}$ résultant d'une évaporation de la solution aquo-organique, préférentiellement acide. De manière générale, l'augmentation de la concentration conjointe du précurseur aluminique et éventuellement du précurseur silicique, et du tensioactif provoque la précipitation du précurseur aluminique et éventuellement du précurseur silicique, hydrolysé(s), autour du tensioactif auto-organisé et en conséquence la structuration du matériau selon l'invention. Les interactions phases inorganique / inorganique, phases organique / organique et phases organique / inorganique conduisent par un mécanisme d'auto-assemblage coopératif à la condensation du précurseur aluminique hydrolysé et éventuellement du précurseur silicique hydrolysé autour du tensioactif auto-organisé. Dans le cas de la préparation d'un matériau mixte mésostructuré/zéolithique, les nanocristaux zéolitiques se retrouvent piégés, lors dudit phénomène d'auto-assemblage, dans la matrice à base d'oxyde d'aluminium, mésostructurée, comprise dans chacune des particules sphériques élémentaires constituant le matériau de l'invention. La technique aérosol est particulièrement avantageuse pour la mise en oeuvre de chacune des étapes b), b') et b") de chacun des trois procédés selon l'invention de manière à contraindre les réactifs présents dans la solution initiale à interagir entre eux, aucune perte de matière hormis les solvants n'étant possible, la totalité des éléments aluminium, éventuellement silicium et éventuellement les nanocristaux zéolithiques, présents initialement étant ainsi parfaitement conservé(s) tout au long de chacun des trois procédés selon l'invention au lieu d'être éliminé lors des étapes de filtration et de lavages rencontrées dans des procédés de synthèse classiques connus de l'Homme du métier.

Les étapes b'), c') et d') respectivement b"), c") et d") selon le premier procédé de préparation du matériau mixte mésostructuré / zéolitique selon l'invention respectivement selon le deuxième procédé de préparation du matériau mixte mésostructuré / zéolithique selon l'invention sont réalisées dans les mêmes conditions opératoires que celles dans lesquelles les étapes b), c) et d) du procédé principal selon l'invention sont réalisées.

Le matériau mésostructuré de l'invention, présentant éventuellement des nanocristaux de zéolithes piégés au sein de la matrice mésostructurée, est caractérisé par plusieurs techniques d'analyses et notamment par Diffraction des Rayons X aux bas angles (DRX aux bas angles), par Diffraction des rayons X aux grands angles (DRX aux grands angles), par Volumétrie à l'azote (BET), par Microscopie électronique à transmission (MET), par microscopie électronique à balayage (MEB) et par Spectrométrie d'émission à plasma induit par haute fréquence (ICP).

La technique de Diffraction des Rayons X aux bas angles (valeurs de l'ange $2\theta$ comprises entre 0,5 et 6°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle $2\theta$ sont associés aux distances inter réticulaires $d_{(hkl)}$ caractéristiques de la symétrie structurale du matériau ((hkl) étant les indices de Miller du réseau réciproque) par la relation de Bragg : $2\ d_{(hkl)} * \sin(\theta) = n * \lambda$. Cette indexation permet alors la détermination des paramètres de maille (abc) du réseau direct, la valeur de ces paramètres étant fonction de la structure hexagonale, cubique, cholestérique, lamellaire, bicontinue ou vermiculaire obtenue. Pour exemple, le diffractogramme de Rayons X aux bas angles d'un matériau mésostructuré constitué de particules sphériques élémentaires comportant une matrice aluminosilicate et obtenu selon le procédé principal de préparation selon l'invention via l'emploi du copolymère à bloc particulier dénommé poly(oxyde d'éthylène)$_{20}$-poly(oxyde de propylène)$_{70}$-poly(oxyde d'éthylène)$_{20}$ (PEO$_{20}$-PPO$_{70}$-PEO$_{20}$ ou Pluronic 123) présente un pic de corrélation parfaitement résolu correspondant à la distance de corrélation entre pores d caractéristique d'une structure de type vermiculaire et définie par la relation de Bragg $2\ d * \sin(\theta) = n * \lambda$.

La technique de Diffraction des Rayons X aux grands angles (valeurs de l'angle $2\theta$ comprises entre 5 et 100°) permet de caractériser un solide cristallisé défini par la répétition d'un motif unitaire ou maille élémentaire à l'échelle moléculaire. Elle suit le même principe physique que celui régissant la technique de diffraction des Rayons X aux bas angles. La technique DRX aux grands angles est donc utilisée pour analyser les matériaux mixtes mésostructuré/zéolithique car elle est tout particulièrement adaptée à la caractérisation structurale des nanocristaux zéolithiques présents dans chacune des particules sphériques élémentaires constituant le matériau mixte mésostructuré/zéolithique selon l'invention. En particulier, elle permet d'accéder à la taille des pores des nanocristaux zéolithiques. Pour exemple, les diffractogrammes de Rayons X grands et bas angles d'un matériau mixte mésostructuré/zéolithique obtenu selon le premier ou le deuxième procédé de préparation d'un matériau mixte mésostructuré/zéolithique selon l'invention comprenant des nanocristaux de zéolithe du type ZSM-5 (MFI), la matrice mésostructurée étant de nature aluminosilicate et obtenue via l'emploi du copolymère à bloc particulier dénommé poly(oxyde d'éthylène)$_{106}$-poly(oxyde de propylène)$_{70}$-poly(oxyde d'éthylène)$_{106}$ (PEO$_{106}$-PPO$_{70}$-PEO$_{106}$ ou F127) présentent respectivement le diffractogramme associé au groupe de symétrie Pnma (N°62) de la zéolithe ZSM-5 aux grands angles et un pic de corrélation parfaitement résolu aux petits angles associé à la structure de type vermiculaire de la matrice mésostructurée qui correspond à une distance d de corrélation entre pores. La valeur de l'angle obtenue sur le diffractogramme RX permet de remonter à la distance de corrélation d selon la loi de Bragg : $2\ d * \sin(\theta) = n * \lambda$. Les valeurs des paramètres de maille a, b, c obtenues pour la caractérisation des nanocristaux de zéolithes sont cohérents avec les valeurs obtenues pour une zéolithe de type ZSM-5 (MFI) bien connues de l'homme de l'art ("Collection of simulated XRD powder patterns for zeolites", 4th revised Edition, 2001, M. M. J. Treacy, J. B. Higgins).

La volumétrie à l'azote correspondant à l'adsorption physique de molécules d'azote dans la porosité du matériau via une augmentation progressive de la pression à température constante renseigne sur les caractéristiques texturales (diamètre de pores, type de porosité, surface spécifique) particulières du matériau selon l'invention. En particulier, elle permet d'accéder à la surface spécifique et à la distribution mésoporeuse du matériau. On entend par surface spécifique, la surface spécifique B.E.T. ($S_{BET}$ en m$^2$/g) déterminée par adsorption d'azote conformément à la norme ASTM D 3663-78 établie à partir de la méthode BRUNAUER-EMMETT-TELLER décrite dans le périodique « The Journal of American Society", 60, 309, (1938). La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH ainsi obtenue est décrite dans le périodique "The Journal of American Society" , 73, 373, (1951) écrit par E. P. Barrett, L. G. Joyner et P. P. Halenda. Dans l'exposé qui suit, le diamètre des mésospores $\phi$ de la matrice mésostructurée donné correspond au diamètre moyen à l'adsorption d'azote défini comme étant un diamètre tel que tous les pores inférieurs à ce diamètre constituent 50% du volume poreux (Vp) mesuré sur la branche d'adsorption de l'isotherme azote. De plus, l'allure de l'isotherme d'adsorption d'azote et de la boucle d'hystérésis peut renseigner sur la nature de la mésoporosité et sur la présence éventuelle de microporosité liée essentiellement aux nanocristaux zéolithiques lorsqu'ils sont présents dans la matrice oxyde mésostructurée. Pour exemple, l'isotherme d'adsorption d'azote relative à un matériau aluminosilicate mésostructuré selon l'invention et obtenu grâce au procédé principal de préparation selon l'invention en utilisant comme tensioactif le copolymère à bloc particulier dénommé poly

(oxyde d'éthylène)$_{20}$-poly(oxyde de propylène)$_{70}$-poly(oxyde d'éthylène)$_{20}$ (PEO$_{20}$-PPO$_{70}$-PEO$_{20}$ ou Pluronic 123 ou P123) est caractérisée par une isotherme d'adsorption de classe IV et une boucle d'hystérésis de type H1, la courbe de distribution poreuse associée étant quant à elle représentative d'une population de mésopores de taille uniforme centrée dans une gamme de 4 à 10 nm. Pour exemple d'un matériau mixte mésostructuré/zéolithique, l'isotherme d'adsorption d'azote d'un tel matériau obtenu selon le premier ou le deuxième des procédés de préparation d'un matériau mixte mésostructuré/zéolithique selon l'invention et comprenant des nanocristaux de zéolithe du type ZSM-5 (MFI), la matrice mésostructurée étant de nature aluminosilicate et obtenue via l'emploi du copolymère à bloc particulier dénommé poly(oxyde d'éthylène)$_{106}$-poly(oxyde de propylène)$_{70}$-poly(oxyde d'éthylène)$_{106}$ (PEO$_{106}$-PPO$_{70}$-PEO$_{106}$ ou F127), présente pour des faibles valeurs de P/P0 (où P0 est la pression de vapeur saturante à la température T) une isotherme de type I caractéristique d'un matériau microporeux et pour les valeurs de P/PO plus élevées une isotherme de type IV ainsi qu'une boucle d'hystérésis de type H1, la courbe de distribution poreuse associée étant quant à elle représentative d'une population de mésopores de taille uniforme centrée dans une gamme de 4 à 10 nm. Concernant la matrice mésostructurée, la différence entre la valeur du diamètre des pores $\phi$ et le paramètre de maille a défini par DRX aux bas angles comme décrit ci-dessus permet d'accéder à la grandeur e où e = a - $\phi$ et est caractéristique de l'épaisseur des parois amorphes de la matrice mésostructurée constituant chacune des particules sphériques du matériau selon l'invention. Ledit paramètre de maille a est relié à la distance d de corrélation entre pores par un facteur géométrique caractéristique de la géométrie de la phase. Pour exemple, dans le cas d'une maille hexagonale e = a - $\phi$ avec $a = 2*d/\sqrt{3}$, dans le cas d'une structure vermiculaire e = d - $\phi$.

L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 0,2 nm. Dans l'exposé qui suit, les photos MET seront réalisées à partir de coupes microtomes de l'échantillon afin de visualiser une section d'une particule sphérique élémentaire du matériau selon l'invention. Pour exemple, les images MET obtenues pour un matériau aluminosilicate mésostructuré selon l'invention et obtenu grâce au procédé principal de préparation selon l'invention en utilisant le copolymère à bloc particulier dénommé Pluronic 123 présentent des particules élémentaires sphériques ayant une mésostructure vermiculaire, la matière étant définie par les zones sombres. L'analyse de l'image permet également d'accéder aux paramètres d, $\phi$ et e caractéristiques de la matrice mésostructurée définis précédemment. Pour exemple d'un matériau mixte mésostructuré/zéolithique, les images MET obtenues pour un tel matériau obtenu selon le premier ou le deuxième des procédés de préparation d'un matériau mixte mésostructuré/zéolithique selon l'invention comprenant des nanocristaux de zéolithe du type ZSM-5 (MFI), la matrice mésostructurée étant de nature aluminosilicate et obtenue via l'emploi du copolymère à bloc particulier dénommé P123 présentent au sein d'une même particule sphérique une mésostructure vermiculaire (la matière étant définie par des zones sombres) au sein de laquelle sont visualisés des objets plus ou moins sphériques opaques représentant les nanocristaux zéolithiques piégés dans la matrice mésostructurée. L'analyse de l'image permet également d'accéder aux paramètres d, $\phi$ et e, caractéristiques de la matrice mésostructurée définis précédemment. Il est possible de visualiser également sur ce même cliché les plans réticulaires des nanocristaux au lieu des objets opaques cités précédemment et de remonter ainsi à la structure de la zéolithe.

La morphologie et la distribution en taille des particules élémentaires ont été établies par analyse de photos obtenues par microscopie électronique à balayage (MEB).

La structure de la matrice mésostructurée constituant chacune des particules du matériau selon l'invention peut être cubique, vermiculaire, cholestérique, lamellaire, bicontinue ou hexagonale en fonction de la nature du tensioactif choisi comme agent structurant. De préférence, il s'agit d'une structure vermiculaire.

La présente invention concerne l'utilisation du matériau mésostructuré selon l'invention comme adsorbant pour le contrôle de la pollution ou comme tamis moléculaire pour la séparation. La présente invention a donc également pour objet un adsorbant comprenant le matériau mésostructuré selon l'invention. Il est également avantageusement utilisé comme solide acide pour catalyser des réactions, par exemple celles intervenant dans les domaines du raffinage et de la pétrochimie.

Lorsque le matériau mésostructuré selon l'invention est utilisé comme catalyseur, ce matériau peut être associé à une matrice inorganique qui peut être inerte ou catalytiquement active et à une phase métallique. La matrice inorganique peut être présente simplement comme liant pour maintenir ensemble les particules dudit matériau sous les différentes formes connues des catalyseurs (extrudés, pastilles, billes, poudres) ou bien peut être ajoutée comme diluant pour imposer le degré de conversion dans un procédé qui sinon progresserait à une allure trop rapide, conduisant à un encrassement du catalyseur en conséquence d'une formation importante de coke. Des matrices inorganiques typiques sont notamment des matières de support pour les catalyseurs comme les différentes formes de silice, d'alumine, de silice-alumine, la magnésie, la zircone, les oxydes de titane, de bore, les phosphates d'aluminium, de titane, de zirconium, les argiles telles que le kaolin, la bentonite, la montmorillonite, la sépiolite, l'attapulgite, la terre à foulon, les matières poreuses synthétiques comme $SiO_2$-$Al_2O_3$, $SiO_2$-$ZrO_2$, $SiO_2$-$ThO_2$, $SiO_2$-$BeO$, $SiO_2$-$TiO_2$ ou toute combinaison de ces composés. La matrice inorganique peut être un mélange de différents composés, en particulier d'une phase inerte et d'une phase active. Ledit matériau de la présente invention peut aussi être associé à au moins une zéolithe et jouer le rôle de phase active principale ou d'additif. La phase métallique peut être introduite intégralement sur ledit matériau de l'invention. Elle peut être également introduite intégralement sur la matrice inorganique ou encore sur l'ensemble matrice inorganique - solide mésostructuré par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments. Les compositions catalytiques comportant le matériau de la présente invention conviennent de façon générale à la mise en oeuvre des principaux procédés de transformation des hydrocarbures et des réactions de synthèse de composés organiques.

Les compositions catalytiques comportant le matériau de l'invention trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage, de reformage, d'hydrogénation et de déshydrogénation, d'oxydation, d'halogénation, d'hydrocraquage, d'hydroconversion, d'hydrotraitement, d'hydrodésulfuration et d'hydrodéazotation, d'élimination catalytique des oxydes d'azote, les dites réactions impliquant des charges comprenant des hydrocarbures aliphatiques saturés et insaturés, des hydrocarbures aromatiques, des composés organiques oxygénés et des composés organiques contenant de l'azote et/ou du soufre ainsi que des composés organiques contenant d'autres groupes fonctionnels.

L'invention est illustrée au moyen des exemples qui suivent.

**Exemple 1 (invention) : Préparation d'un matériau aluminosilicate mésostructuré à forte teneur en aluminium de rapport molaire Si/Al = 0,5.**

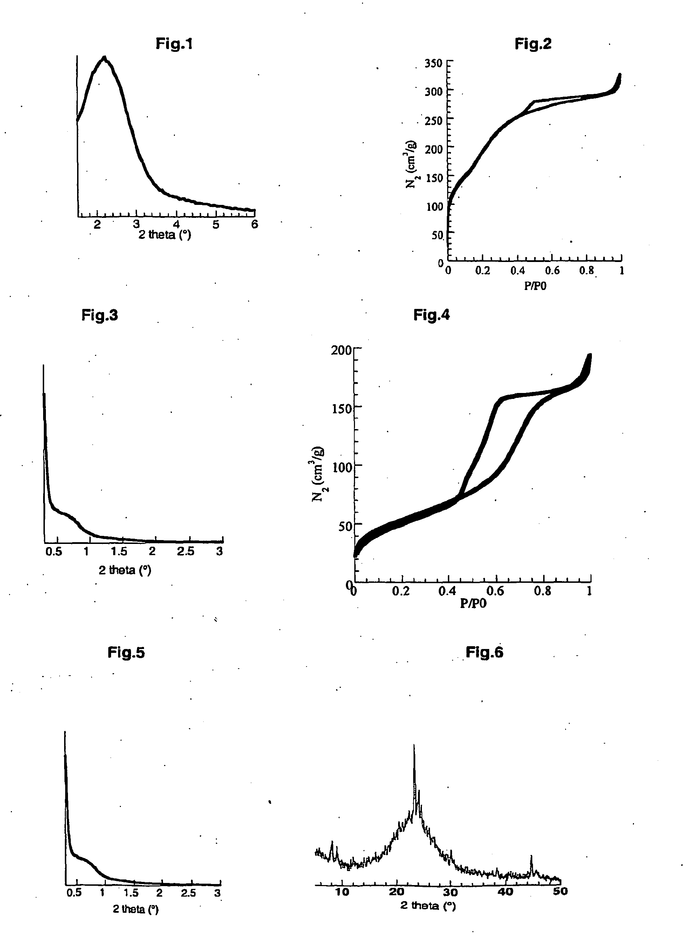

3,38 g de trichlorure d'aluminium sont ajoutés à une solution contenant 30 g d'éthanol, 13,6 ml d'eau, 0,036 ml d'HCl et 1,4 g de tensioactif CTAB. L'ensemble est laissé sous agitation à température ambiante jusqu'à dissolution complète du précurseur aluminique. 1,45 g de tetraéthylorthosilicate (TEOS) sont alors additionnés. Après une agitation de 10 mn à température ambiante, l'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars) tel qu'il a été décrit dans la description ci-dessus. Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure 1), par Volumétrie à l'azote (figure 2, la grandeur P0 indiquée en abscisse est la pression de vapeur saturante), par MET (figure 3), par MEB et par ICP. L'analyse MET montre que le matériau final présente une mésoporosité organisée caractérisée par une structure vermiculaire. L'analyse par Volumétrie à l'azote conduit à une surface spécifique du matériau final de $S_{BET}$ = 780 m$^2$/g et à un diamètre mésoporeux de $\phi$ = 2,5 nm. L'analyse DRX aux petits angles conduit à la visualisation d'un pic de corrélation à l'angle 2θ = 2,2. La relation de Bragg 2 d * sin (1,1) = 1,5406 permet de calculer la distance d de corrélation entre les pores de la matrice mésotructurée, soit d = 4,0 nm. L'épaisseur des parois de la matrice mésostructurée définie par e = d - $\phi$ est donc de e = 1,5 nm. L'analyse ICP donne un rapport molaire Si/Al égal à 0,5. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

**Exemple 2 (invention) : Préparation d'un matériau aluminosilicate mésostructuré à forte teneur en aluminium de rapport molaire Si/Al = 0,9.**

2,65 g de trichlorure d'aluminium sont ajoutés à une solution contenant 30 g d'éthanol, 13,8 ml d'eau, 0,036 ml d'HCl et 1,4 g de tensioactif P123. L'ensemble est laissé sous agitation à température ambiante jusqu'à dissolution complète du précurseur aluminique. 2 g de tetraéthylorthosilicate (TEOS) sont alors additionnés. Après une agitation de 18 heures à température ambiante, l'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure 4), par Volumétrie à l'azote (figure 5, la grandeur P0 indiquée en abscisse est la pression de vapeur saturante), par MET (figure 6), par MEB et par ICP. L'analyse MET montre que le matériau final présente une mésoporosité organisée caractérisée par une structure vermiculaire. L'analyse par Volumétrie à l'azote conduit à une surface spécifique du matériau final de $S_{BET}$ = 180 m$^2$/g et à un diamètre mésoporeux de 5,6 nm. L'analyse DRX aux petits angles conduit à la visualisation d'un pic de corrélation à l'angle 2θ = 0,64. La relation de Bragg 2 d * sin (0,32) = 1,5406 permet de calculer la distance d de corrélation entre les pores de la matrice mésostructurée, soit d = 13,1 nm. L'épaisseur des parois de la matrice mésostructurée définie par e = d - $\phi$ est donc de e = 7,5 nm. L'analyse ICP donne un rapport molaire Si/Al égal à 0,9. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

Exemple 3 (invention) : Préparation d'un matériau aluminosilicate mésostructuré à forte teneur en aluminium comprenant des nanocristaux de zéolithes de type ZSM-5 (MFI) (Si/Al molaire = 100, 10% poids du matériau final) piégés dans une matrice aluminosilicate mésostructurée (Si/Al molaire = 0,9).

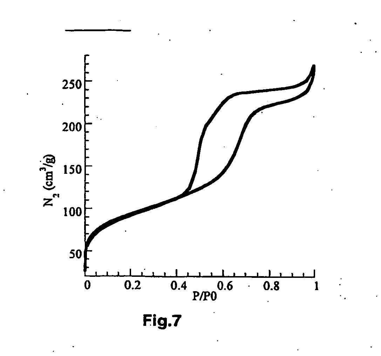

0,14 g de tri-sec-butoxyde d'aluminium sont ajoutés à une solution contenant 3,5 ml d'hydroxyde de tétrapropylammonium (TPAOH), 0,01 g de soude NaOH et 4,3 ml d'eau. Après dissolution de l'alcoxyde d'aluminium, 6 g de tetraéthylorthosilicate (TEOS) sont ajoutés. La solution est agitée à température ambiante pendant 5 h puis est autoclavée à T = 95°C pendant 12 h. La solution blanche obtenue contient des nanocristaux de ZSM-5 de 135 nm. Cette solution est centrifugée à 20000 rpm pendant 30 minutes. Le solide est redispersé dans de l'eau puis centrifugé de nouveau à 20000 rpm pendant 30 minutes. Ce lavage est effectué deux fois. Les nanocristaux forment un gel séché à l'étuve une nuit à 60°C. 0,461 mg de ces cristaux sont redispersés dans une solution contenant 30 g d'éthanol, 13,8 ml d'eau, 2 g de TEOS, 2,65 g de AlCl$_3$, 6H$_2$0, 0,036 ml d'HCl et 1,4 g de tensioactif P123 par agitation aux ultra-sons pendant 24 heures. L'ensemble est envoyé dans la chambre d'atomisation du générateur d'aérosol et la solution est pulvérisée sous la forme de fines gouttelettes sous l'action du gaz vecteur (air sec) introduit sous pression (P = 1,5 bars) selon la méthode décrite dans l'exposé de l'invention ci-dessus. Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles (figure7) et aux grands angles (figure 8), par Volumétrie à l'azote (figure 9), par MET (figure 10), par MEB et par ICP. L'analyse MET montre que le matériau final est constitué de nanocristaux de zéolithe ZSM-5 piégés dans une matrice aluminosilcate à mésoporosité organisée caractérisée par une structure vermiculaire. L'analyse par Volumétrie à l'azote conduit à une surface spécifique du matériau final de S$_{BET}$ = 310 m$^2$/g et à un diamètre mésoporeux caractéristique de la matrice mésostructurée aluminosilcate de $\phi$ = 5,6 nm. L'analyse DRX aux grands angles conduit à l'obtention du diffractogramme caractéristique de la zéolithe ZSM-5 (taille des micropores de l'ordre de 0,55 nm). L'analyse DRX aux petits angles conduit à la visualisation d'un pic de corrélation associé à la symétrie vermiculaire de la matrice mésostructurée. La relation de Bragg donne 2 d * sin (0,32) = 1,5406, soit d = 13,1 nm. L'épaisseur des parois amorphes de la matrice mésostructurée aluminosilicate définie par e = d - $\phi$ est donc de e = 7,5 nm. L'analyse ICP donne un rapport molaire Si/Al de la matrice égal à 0,9. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

**Revendications**

1. Matériau mésostructuré constitué d'au moins deux particules sphériques élémentaires, chacune desdites particules comprenant une matrice mésostructurée à base d'oxyde d'aluminium, ayant une taille de pores comprise entre 1,5 et 30 nm et une teneur en oxyde d'aluminium représentant plus de 46% poids par rapport à la masse de ladite matrice, laquelle présente des parois amorphes d'épaisseur comprise entre 1 et 30 nm, lesdites particules sphériques élémentaires ayant un diamètre maximal de 10 $\mu$m.

2. Matériau selon la revendication 1 tel que ladite matrice mésostructurée à base d'oxyde d'aluminium comprend de l'oxyde de silicium.

3. Matériau selon la revendication 2 tel que ladite matrice mésostructurée présente un rapport molaire Si/Al strictement inférieur à 1.

4. Matériau selon l'une des revendications 1 à 3 tel que ladite matrice mésostructurée présente une structure cubique, vermiculaire, cholestérique, lamellaire, bicontinue ou hexagonale.

5. Matériau selon l'une des revendications 1 à 4 tel qu'il présente une surface spécifique comprise entre 100 et 1200 m$^2$/g.

6. Matériau selon l'une des revendications 1 à 5 tel que chacune desdites particules sphériques comprend des nanocristaux zéolithiques ayant une taille de pores comprise entre 0,2 et 2 nm.

7. Matériau selon la revendication 6 tel que lesdits nanocristaux zéolithiques comprennent au moins une zéolithe choisie parmi les zéolithes de type structural MFI, BEA, FAU et LTA.

8. Matériau selon la revendication 6 ou 7 tel que lesdits nanocristaux zéolithiques comprennent au moins une zéolithe entièrement silicique.

**9.** Matériau selon la revendication 6 ou 7 tel que lesdits nanocristaux zéolithiques comprennent au moins une zéolithe contenant du silicium et de l'aluminium.

**10.** Procédé de préparation d'un matériau mésostructuré selon l'une des revendications 1 à 9 comprenant a) le mélange en solution d'au moins un tensioactif, d'au moins un précurseur aluminique et éventuellement d'au moins un précurseur silicique ; b) l'atomisation par aérosol de la solution obtenue à l'étape a) pour conduire à la formation de gouttelettes sphériques de diamètre inférieur ou égal à 200 $\mu$m ; c) le séchage desdites gouttelettes et d) l'élimination dudit tensioactif pour l'obtention d'un matériau mésostructuré.

**11.** Procédé de préparation d'un matériau mésostructuré selon l'une des revendications 6 à 9 comprenant $a_0$) la synthèse, en présence d'au moins un agent structurant, de nanocristaux zéolithiques de taille nanométrique maximale égale à 300 nm afin d'obtenir une solution colloïdale dans laquelle sont dispersés lesdits nanocristaux ; a') le mélange en solution d'au moins un tensioactif, d'au moins un précurseur aluminique et éventuellement d'au moins un précurseur silicique, et d'au moins une solution colloïdale obtenue selon $a_0$) ; b') l'atomisation par aérosol de la solution obtenue à l'étape a') pour conduire à la formation de gouttelettes sphériques de diamètre inférieur ou égal à 200 $\mu$m ; c') le séchage desdites gouttelettes et d') l'élimination dudit tensioactif et dudit agent structurant pour l'obtention d'un matériau mixte mésostructuré/zéolithique.

**12.** Procédé de préparation d'un matériau mésostructuré selon l'une des revendications 6 à 9 comprenant a") le mélange en solution d'au moins un tensioactif, d'au moins un précurseur aluminique, éventuellement d'au moins un précurseur silicique, et de cristaux zéolithiques se dispersant sous la forme de nanocristaux de taille nanométrique maximale égale à 300 nm dans ladite solution ; b") l'atomisation par aérosol de ladite solution obtenue à l'étape a") pour conduire à la formation de gouttelettes sphériques de diamètre inférieur ou égal à 200 $\mu$m ; c") le séchage desdites gouttelettes et d") l'élimination d'au moins dudit tensioactif pour l'obtention d'un matériau mixte mésostructuré/zéolithique.

**13.** Adsorbant comprenant le matériau mésostructuré selon l'une des revendications 1 à 9 ou préparé selon l'une des revendications 10 à 12.

**14.** Catalyseur comprenant le matériau mésostructuré selon l'une des revendications 1 à 9 ou préparé selon l'une des revendications 10 à 12.

**Claims**

**1.** Mesostructured material that consists of at least two elementary spherical particles, whereby each of said particles comprises a mesostructured matrix that is based on aluminum oxide and has a pore size of between 1.5 and 30 nm and an aluminum oxide content that represents more than 46% by weight relative to the mass of said matrix, which has amorphous walls of a thickness of between 1 and 30 nm, whereby said elementary spherical particles have a maximum diameter of 10 $\mu$m.

**2.** Material according to claim 1, such that said mesostructured matrix that is based on aluminum oxide comprises silicon oxide.

**3.** Material according to claim 2, such that said mesostructured matrix has an Si/Al molar ratio that is strictly less than 1.

**4.** Material according to one of claims 1 to 3, such that said mesostructured matrix has a cubic, vermicular, cholesteric, lamellar, bicontinuous or hexagonal structure.

**5.** Material according to one of claims 1 to 4, such that it has a specific surface area of between 100 and 1200 m$^2$/g.

**6.** Material according to one of claims 1 to 5, such that each of said spherical particles comprises zeolitic nanocrystals having a pore size of between 0.2 and 2 nm.

**7.** Material according to claim 6, such that said zeolitic nanocrystals comprise at least one zeolite that is selected from among the zeolites of MFI, BEA, FAU and LTA structural type.

**8.** Material according to claim 6 or 7, such that said zeolitic nanocrystals comprise at least one zeolite that is entirely silica.

**9.** Material according to claim 6 or 7, such that said zeolitic nanocrystals comprise at least one zeolite that contains silicon and aluminum.

**10.** Process for the preparation of a mesostructured material according to one of claims 1 to 9 comprising a) the mixing in solution of at least one surfactant, at least one aluminum precursor, and optionally at least one silica precursor; b) the aerosol spraying of the solution that is obtained in stage a) to lead to the formation of spherical droplets with a diameter of less than or equal to 200 $\mu$m; c) the drying of said droplets and d) the elimination of said surfactant for obtaining a mesostructured material.

**11.** Process for the preparation of a mesostructured material according to one of claims 6 to 9 that comprises $a_0$ ) the synthesis, in the presence of at least one structuring agent, of zeolitic nanocrystals of a maximum nanometric size that is equal to 300 nm so as to obtain a colloidal solution within which said nanocrystals are dispersed; a') the mixing in solution of at least one surfactant, at least one aluminum precursor, and optionally at least one silica precursor, and at least one colloidal solution that is obtained according to $a_0$); b') the aerosol spraying of the solution that is obtained in stage a') to lead to the formation of spherical droplets with a diameter that is less than or equal to 200 $\mu$m; c') the drying of said droplets, and d') the elimination of said surfactant and said structuring agent for obtaining a mesostructured/zeolitic mixed material.

**12.** Process for the preparation of a mesostructured material according to one of claims 6 to 9 comprising a") the mixing in solution of at least one surfactant, at least one aluminum precursor, optionally at least one silica precursor, and zeolitic crystals that are dispersed in the form of nanocrystals of a maximum nanometric size that is equal to 300 nm in said solution; b") the aerosol spraying of said solution that is obtained in stage a") to lead to the formation of spherical droplets of a diameter that is less than or equal to 200 $\mu$m; c") the drying of said droplets and d") the elimination of at least said surfactant for obtaining a mesostructured/zeolitic mixed material.

**13.** Adsorbent comprising the mesostructured material according to one of claims 1 to 9 or prepared according to one of claims 10 to 12.

**14.** Catalyst comprising the mesostructured material according to one of claims 1 to 9 or prepared according to one of claims 10 to 12.

**Patentansprüche**

**1.** Mesostrukturwerkstoff, bestehend aus mindestens zwei elementaren sphärischen Teilchen, wobei jedes der Teilchen eine Mesostrukturmatrix auf der Grundlage von Aluminiumoxid aufweist, mit einer Porengröße zwischen 1,50 und 30 nm und einem Aluminiumoxidgehalt, der über 46 Gew.-% im Vergleich zu der Masse der Matrix ausmacht, die amorphe Wände mit einer Stärke zwischen 1 und 30 nm aufweist, wobei die elementaren sphärischen Teilchen einen Höchstdurchmesser von 10 $\mu$m haben.

**2.** Werkstoff nach Anspruch 1 derart, dass die Mesostrukturmatrix auf Aluminiumoxidbasis Siliciumoxid aufweist.

**3.** Werkstoff nach Anspruch 2 derart, dass die Mesostrukturmatrix ein Molverhältnis Si/Al strikt kleiner als 1 aufweist.

**4.** Werkstoff nach einem der Ansprüche 1 bis 3 derart, dass die Mesostrukturmatrix eine kubische, vermiculare, cholesterische, lamellenförmige, bikontinuierliche oder sechseckige Struktur aufweist.

**5.** Werkstoff nach einem der Ansprüche 1 bis 4 derart, dass er eine spezifische Fläche zwischen 100 und 1200 m$^2$/g aufweist.

**6.** Werkstoff nach einem der Ansprüche 1 bis 5 derart, dass jedes der sphärischen Teilchen Zeolith-Nanokristalle aufweist, die eine Porengröße zwischen 0,2 und 2 nm haben.

**7.** Werkstoff nach Anspruch 6 derart, dass die Zeolith-Nanokristalle mindestens einen Zeolith aufweisen, der aus den Zeolithtypen mit dem Strukturtyp MFI, BEA, FAU und LTA ausgewählt ist.

**8.** Werkstoff nach Anspruch 6 oder 7 derart, dass die Zeolith-Nanokristalle mindestens einen gänzlich silicidischen Zeolith aufweisen.

**9.** Werkstoff nach Anspruch 6 oder 7 derart, dass die Zeolith-Nanokristalle mindestens einen Zeolith aufweisen, der Silicium und Aluminium enthält.

**10.** Verfahren zum Zubereiten eines Mesostrukturwerkstoffs nach einem der Ansprüche 1 bis 9, enthaltend a) das Mischen in Lösung mindestens eines Tensids, mindestens eines Aluminiumoxidvorläufers und eventuell mindestens eines Siliciumvorläufers; b) das Zerstäuben durch Aerosol der im Schritt a) erzielten Lösung, um zur Bildung sphärischer Tröpfchen mit einem Durchmesser kleiner oder gleich 200 $\mu$m zu führen; c) das Trocknen der Tröpfchen und d) das Eliminieren des Tensids zum Erzielen eines Mesostrukturwerkstoffs.

**11.** Zubereitungsverfahren eines Mesostrukturwerkstoffs nach den Ansprüchen 6 bis 9, enthaltend $a_0$) die Synthese in Gegenwart mindestens eines Strukturierungsmittels von Zeolith-Nanokristallen mit maximaler Größe im Nanometerbereich von 300 nm, um eine kolloidale Lösung zu erzielen, in der die Nanokristalle verstreut sind; a') das Mischen in Lösung mindestens eines Tensids, mindestens eines Aluminiumoxidvorläufers und eventuell mindestens eines Siliciumvorläufers und mindestens einer kolloidalen Lösung, die gemäß $a_0$) erzielt wurde; b') das Zerstäuben durch Aerosol der in Schritt a') erzielten Lösung, um zur Bildung sphärischer Tröpfen mit Durchmesser kleiner oder gleich 200 $\mu$m zu führen; c') das Trocknen der Tröpfchen und d') das Eliminieren des Tensids und des Strukturmittels zum Erzielen eines gemischten Mesostruktur-/Zeolithwerkstoffs aufweist.

12. Zubereitungsverfahren eines Mesostrukturwerkstoffs nach den Ansprüchen 6 bis 9, das a") das Mischen in Lösung mindestens eines Tensids, mindestens eines Aluminiumoxidvorläufers, eventuell mindestens eines Siliciumvorläufers und von Zeolithkristallen enthält, die sich in Form von Nanokristallen mit maximaler Größe im Nanometerbereich gleich 300 nm in der Lösung verstreuen; b") das Zerstäuben durch Aerosol der in Schritt a") erzielten Lösung, um zur Bildung sphärischer Tröpfchen mit Durchmesser kleiner oder gleich 200 μm zu führen; c") das Trocknen der Tröpfchen und d") das Eliminieren mindestens des Tensids, um einen gemischten Mesostruktur-/Zeolithwerkstoff zu erzielen.

13. Sorptionsmittel, das den Mesostrukturwerkstoff nach einem der Ansprüche 1 bis 9 aufweist oder gemäß einem der Ansprüche 10 bis 12 zubereitet ist.

14. Katalysator, der den Mesostrukturwerkstoff nach einem der Ansprüche 1 bis 9 oder den Mesostrukturwerkstoff, der gemäß einem der Ansprüche 10 bis 12 zubereitet ist, aufweist.

**Fig.1**

**Fig.2**

**Fig.3**

**Fig.4**

**Fig.5**

**Fig.6**

**Fig.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6387453 B
- WO 9937705 A
- WO 9639357 A
- US 6669924 B

**Littérature non-brevet citée dans la description**

- **G. J. de A. A. Soler-Illia ; C. Sanchez ; B. Lebeau ; J. Patarin.** *Chem. Rev.,* 2002, vol. 102, 4093
- **C. J. Brinker ; Y. Lu ; A. Sellinger ; H. Fan.** *Adv. Mater.,* 1999, vol. 11, 7
- **J. S. Beck ; J. C. Vartuli ; W. J. Roth ; M. E. Leonowicz ; C. T. Kresge ; K. D. Schmitt ; C. T.-W. Chu ; D. H. Olson ; E. W. Sheppard ; S. B. McCullen.** *J. Am. Chem. Soc.,* 1992, vol. 114 (27), 10834
- **S. Kawi ; S. C. Shen.** *Stud. Surf. Sci. Catal.,* 2000, vol. 129, 227
- **S. Kawi ; S. C. Shen.** *Stud. Surf. Sci. Catal.,* 2000, vol. 129, 219
- **R. Mokaya ; W. Jones.** *Chem. Commun.,* 1997, 2185
- **D. Zhao ; J. Feng ; Q. Huo ; N. Melosh ; G. H. Fredrickson ; B. F. Chmelka ; G. D. Stucky.** *Science,* 1998, vol. 279, 548
- **Y. -H. Yue ; A. Gédéon ; J. -L. Bonardet ; J. B. d'Espinose ; N. Melosh ; J. Fraissard.** *Stud. Surf. Sci. Catal.,* 2000, vol. 129, 209
- **Z. Zhang ; Y. Han ; F. Xiao ; S. Qiu ; L. Zhu ; R. Wang ; Y. Yu ; Z. Zhang ; B. Zou ; Y. Wang.** *J. Am. Chem. Soc.,* 2001, vol. 123, 5014
- **Y. Liu ; W. Zhang ; T. J. Pinnavaia.** *J. Am. Chem., Soc.,* 2000, vol. 122, 8791
- **A. Karlsson ; M. Stöcker ; R. Schmidt.** *Micropor. Mesopor. Mater.,* 1999, vol. 27, 181
- **P. Prokesova ; S. Mintova ; J. Cejka ; T. Bein.** *Micropor. Mesopor. Mater.,* 2003, vol. 64, 165
- **D. T. On ; S. Kaliaguine.** *Angew. Chem. Int. Ed.,* 2002, vol. 41, 1036
- **S. Förster ; M. Antionnetti.** *Adv.Mater,* 1998, vol. 10, 195-217
- **S. Förster ; T.Plantenberg.** *Angew. Chem. Int. Ed,* 2002, vol. 41, 688-714
- **H. Côlfen.** *Macromol. Rapid Commun,* 2001, vol. 22, 219-252
- **T. Bein.** *Micropor. Mesopor. Mater.,* 2003, vol. 64, 165
- **T. J. Pinnavaia.** *J. Am. Chem. Soc.,* 2000, vol. 122, 8791
- **Kloetstra.** *Microporous Mater.,* 1996, vol. 6, 287
- **R. de Ruiter.** Synthesis of Microporous Materials. 1992, vol. I, 167
- **A.E. Persson ; B.J. Schoeman ; J. Sterte ; J.-E. Otterstedt.** *Zeolites,* 1995, vol. 15, 611-619
- **M. M. J. Treacy ; J. B. Higgins.** Collection of simulated XRD powder patterns for zeolites. 2001
- **BRUNAUER-EMMETT-TELLER.** *The Journal of American Society,* 1938, vol. 60, 309
- **E. P. Barrett ; L. G. Joyner ; P. P. Halenda.** *The Journal of American Society,* 1951, vol. 73, 373